# EUROPEAN PATENT SPECIFICATION

(11) **EP 2 199 265 B1**
(45) Date of publication and mention of the grant of the patent: **07.11.2012**
(21) Application number: 08840375.3
(22) Date of filing: 30.09.2008
(51) Int. Cl.: C08L 35/06, C08L 39/04, C03C 25/26, C03C 25/32, C08J 5/08, C08L 31/04, C08L 33/14, C08L 33/24, C08L 83/04

(54) **GLASS FIBER SIZING AGENT CONTAINING AMPHOTERIC POLYMER COMPOUND**
GLASFASERSCHLICHTE MIT EINER AMPHOTEREN POLYMERVERBINDUNG
AGENT D'ENSIMAGE DE FIBRES DE VERRE CONTENANT UN COMPOSÉ POLYMÉRIQUE AMPHOTÈRE

(30) Priority: 17.10.2007 JP 2007270566; 17.10.2007 JP 2007270567
(43) Date of publication of application: 23.06.2010
(73) Proprietor: Nitto Boseki CO., LTD., Fukushima 960-8161 (JP)
(72) Inventor: ITOH, Hirotaka, Fukushima-shi Fukushima 960-8161 (JP); HIKINO, Shunichi, Fukushima-shi Fukushima 960-8161 (JP); SATOH, Kazutoshi, Fukushima-shi Fukushima 960-8161 (JP); TAKAYAMA, Hiroyuki, Koriyama-shi Fukushima 963-8061 (JP)
(74) Representative: Vossius & Partner
(86) International application number: PCT/JP2008/067759
(87) International publication number: WO 2009/051005

(56) References cited:
- DE-A1- 2 416 675
- JP-A- 6 212 597
- JP-A- 2001 354 455
- JP-A- 2003 238 211
- JP-A- 2006 273 651
- JP-B2- 1 023 579

## Description

### Technical Field

The present invention relates to a glass fiber sizing agent, to a chopped strand coated with the glass fiber sizing agent, and to a method for producing a thermoplastic resin mold using the chopped strands. The invention further relates to a glass fiber bundle coated with the glass fiber sizing agent, to a thermoplastic resin pellet comprising the glass fiber bundle, and to a mold produced from the pellets.

### Background Art

Glass fiber-reinforced thermoplastic resins are used for various purposes including automobile interior parts, household electrical appliances and the like. The matrix resins used in glass fiber-reinforced thermoplastic resins are commonly thermoplastic resins such as polyolefins or polyamides.

For production of a glass fiber-reinforced resin mold, a glass fiber bundle coated with a sizing agent may be used as the reinforcing material. Specifically, a glass fiber bundle coated with a sizing agent is cut to a length of 1-10 mm to make chopped glass fiber (chopped strands), and this is kneaded with a thermoplastic resin as the matrix resin under heating and the kneaded blend is packed into a die to produce a mold.

Known methods for producing glass fiber-reinforced resin molds include methods using chopped strands, as well as methods using glass fiber-reinforced thermoplastic resin pellets (LFT pellets: long fiber thermoplastic pellets). LFT pellets are produced by a process in which a glass fiber bundle is impregnated with a matrix resin. That is, the matrix resin is impregnated into a glass fiber bundle or a glass roving into which multiple glass fiber bundles are further bundled, after which it is cut to a length of 5-30 mm. The LFT pellets are plasticized under heating and the kneaded blend is packed into a die to produce a mold.

Using LFT pellets generally yields a stronger mold than using chopped strands. This is believed to be because when using LFT pellets impregnated with a matrix resin, cutting of the glass fibers during kneading is inhibited and relatively long glass fibers remain in the mold.

Incidentally, a sizing agent is used to keep the glass fibers in a bundle during the process of producing chopped strands or LFT pellets. As glass fiber sizing agents there are commonly used coat-forming agents, lubricants, antistatic agents, or organosilane compounds dissolved or dispersed and emulsified in water. Glass fiber sizing agents have conventionally contained coat-forming agents such as urethane resins or acrylic resins.

When chopped strands coated with a sizing agent are used as the reinforcing material, the obtained glass fiber-reinforced resin mold has not always exhibited sufficient water resistance and impact strength. Thus, the sizing agent has a major effect on the chopped strand performance and therefore on the performance of the produced mold. Consequently, much research has been conducted on specifications of sizing agents that can improve the water resistance and mechanical strength of molds.

For example, Patent document 1 describes a technique using glass fibers surface-treated with a maleic anhydride copolymer and silane-based coupling agent, in order to improve the mechanical strength of molds. It also teaches that the technique can improve the water resistance of molds, when a polyamide resin or the like is used as the matrix resin.

Patent document 2 describes a technique wherein a polyamide resin is impregnated into a glass fiber bundle treated with a treatment agent comprising a copolymer of an unsaturated carboxylic acid (for example, maleic acid) and an unsaturated monomer (for example, ethylene). Also, Patent document 3 describes a technique wherein a sizing agent containing an acid-modified olefin resin (for example, maleic acid-modified polypropylene) neutralized with an amine is used to produce a glass fiber-reinforced mold wherein the matrix resin is an olefin resin.

Patent document 4 describes a method for producing homo- and copolymers of at least one dialkylamine derivative by photopolymerization. The application discloses inter alia amphoteric polymer compounds which may be used as glass fiber sizing agents.

### Citation List

[Patent document 1] Japanese Examined Patent Publication SHO No. 61-37308
[Patent document 2] Japanese Patent Publication No. 2764550
[Patent document 3] Japanese Unexamined Patent Publication No. 2003-253563
[Patent document 4] German Patent Application DE 24 166 75 A1

### Summary of Invention

### Problems to be Solved by the Invention

According to investigation by the present inventors, however, the sizing agent containing the maleic anhydride copolymer described in Patent document 1 is unstable in the acidic range and readily precipitates. Also, chopped strands surface-treated with the sizing agent tend to result in yellowing of the color tone of molds when used as reinforcing material for molds with a polyamide resin as the matrix resin. In addition, chopped strands surface-treated with the sizing agent form molds with insufficient mechanical strength or water resistance, when used in molds with polyolefin resins such as polypropylene as the matrix resin.

Furthermore, adequate performance is not always exhibited when the treatment agents or sizing agents described in Patent documents 2 and 3 are acidic. Specifically, the treatment agent in Patent document 2 has insufficient stability which results in production of precipitates in the acidic range. This has been an inconvenience in that it limits selection of the type of additives (for example, lubricants). The sizing agent of Patent document 3 has insufficient spinning properties in the acidic range. The spinning property is the performance that relates to the take-up ease of glass fiber bundles coated with the sizing agent, and an inadequate spinning property of a sizing agent can cause take-up problems and hamper take-up into square-end cheese forms.

The chopped strands coated with the sizing agent described in Patent document 1 are not currently used as reinforcing material for polyolefin resin molds. On the other hand, the treatment agent of Patent document 2 is prepared for polyamide resins while the sizing agent of Patent document 3 is prepared for olefin resins. That is, for conventional sizing agents it is necessary to vary the specifications according to the type of resin used as the matrix resin.

It is an object of the present invention, which has been accomplished under the circumstances described above, to provide a glass fiber sizing agent with high flexibility of use with the matrix resins of glass fiber-reinforced resins.

It is another object of the invention to provide chopped strands bundled with the glass fiber sizing agent, and a method for producing a mold using the chopped strands.

It is yet another object of the invention to provide a glass fiber bundle and glass fiber-reinforced thermoplastic resin pellets comprising the glass fiber sizing agent, as well as a mold produced from the pellets.

### Means for Solving the Problems

The present inventors have diligently studied specifications for glass fiber sizing agents that can be used for any of the thermoplastic resins such as polyolefin resins and polyamide resins that are widely employed as matrix resins. As a result, it was found that when amphoteric polymer compounds that are conventionally employed in the field of paper-making chemicals (see Japanese Patent Publication No. 3291506) are used as film-forming agents, a sizing agent with high flexibility of use for matrix resins is obtained and that the sizing agent can be applied for production of chopped strands and LFT pellets, and the invention was completed upon this finding.

The invention provides a glass fiber sizing agent that is suitable for production of chopped strands (hereinafter referred to as "first sizing agent"). Specifically, the first sizing agent comprises an amphoteric polymer compound, a lubricant and water, wherein the amphoteric polymer compound comprises at least one cationic unit selected from the group consisting of allylamines represented by the following general formula (1), (2a), (2b), (3a) or (3b), and inorganic acid salts and organic acid salts thereof, and at least one anionic unit represented by the following general formula (4), (5) or (6). 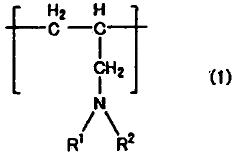 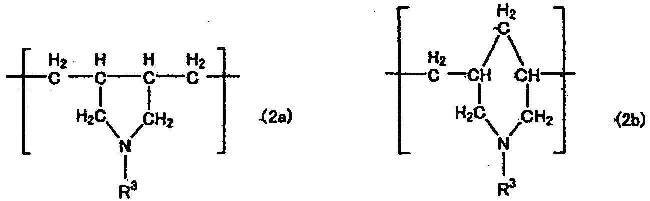 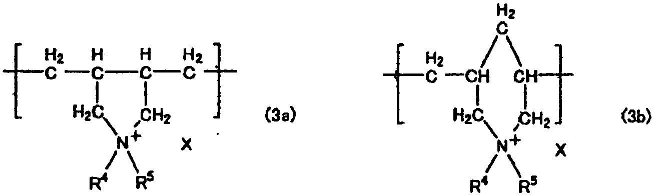 R¹ and R² each independently represent hydrogen, methyl, ethyl or cyclohexyl; R³, R⁴ and R⁵ each independently represent hydrogen, methyl, ethyl or benzyl, and X represents an anion. As examples for the anion X there may be mentioned inorganic anions such as Cl⁻, 1/2SO₄²⁻, NO₃⁻ and PO₄³⁻, and organic anions such as CH₃COO⁻ and HOCH₂CH₂SO₃⁻. 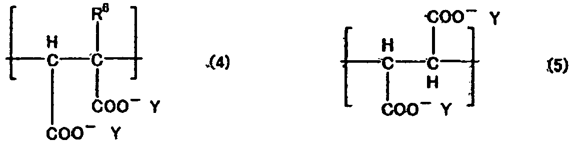 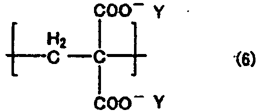 R⁶ is hydrogen or a methyl group; and each Y independently represents a cation selected from among Na⁺, K⁺, NH₄⁺, 1/2Ca²⁺, 1/2Mg²⁺, 1/2Fe²⁺, 1/3Al³⁺ and 1/3Fe³⁺.

The first sizing agent used may be any one where the matrix resin in the glass fiber-reinforced resin is any polyolefin or polyamide. Thus, the first sizing agent may be applied for production of chopped strands that are useful as such thermoplastic resin reinforcing materials.

In addition, since the first sizing agent has lower viscosity than a sizing agent containing a maleic anhydride copolymer such as a butadiene maleic acid copolymer, it allows sufficient control of adhesion onto the glass fibers during the step of producing the glass fiber bundles. As a result, sufficiently high workability and economy can be achieved. The first sizing agent also allows coloration of the mold caused by the sizing agent to be adequately prevented.

The amphoteric polymer compound in the first sizing agent is preferably a copolymer of maleic acid and at least one cationic unit selected from the group consisting of an allylamines represented by general formula (1), (2a), (2b), (3a) or (3b) above and inorganic acid salts and organic acid salts thereof. It is more preferred to use a copolymer of a diallylamine and maleic acid as the amphoteric polymer compound. An amphoteric polymer compound comprising a copolymer of a diallylamine and maleic acid has the advantage of allowing preparation of a glass fiber sizing agent that can exhibit stable performance compared to amphoteric polymer compounds composed of different kinds of polymers.

The first sizing agent preferably contains the amphoteric polymer compound at 50-90 wt% based on the total weight of the non-volatile components in the glass fiber sizing agent. Non-volatile components according to the invention are components that do not volatilize when the glass fiber sizing agent is coated onto a glass fiber filament and heated to 110°C.

The pH of the first sizing agent may be in the range of 3-5. The first sizing agent can adequately inhibit precipitation and degeneration of the components in the aforementioned pH range which is at the acidic end. Thus, compounds that function under acidic conditions can be included as additives in the glass fiber sizing agent.

The chopped strands of the invention are obtained by coating glass fiber bundles with lengths of 1-10 mm with the non-volatile components of the first sizing agent. The chopped strands of the invention may be obtained by a step of coating the glass fiber bundles with the first sizing agent, a step of removing the volatile components of the first sizing agent that has adhered onto the glass fiber bundles, and a step of cutting the glass fiber bundles coated with the first sizing agent, to 1-10 mm.

The method for producing a glass fiber-reinforced resin mold according to the invention comprises a kneading step in which chopped strands according to the invention and a thermoplastic resin (matrix resin) are kneaded, and a molding step in which the kneaded blend obtained in the kneading step is injection molded to obtain a mold. The matrix resin used for the method of the invention may be a polyolefin resin or polyamide resin.

The invention also provides a glass fiber sizing agent that is suitable for production of LFT pellets (hereinafter referred to as "second sizing agent"). Specifically, the second sizing agent comprises an organosilane compound as a further essential component in addition to the amphoteric polymer compound, the lubricant and water contained in the first sizing agent. The second sizing agent contains the amphoteric polymer compound at 20 wt% or greater and less than 50 wt%, based on the total weight of the non-volatile components. The amphoteric polymer compound in the second sizing agent functions as a film-forming agent, while the organosilane compound functions as a coupling agent.

The second sizing agent used may be any one wherein the matrix resin in the glass fiber-reinforced resin is any polyolefin or polyamide. Consequently, the second sizing agent is suitable as a sizing agent for bundling of glass fiber filaments, when producing LFT pellets to be obtained by impregnation with such thermoplastic resins.

It is preferred to use a copolymer of a diallylamine and maleic acid as the amphoteric polymer compound in the second sizing agent. An amphoteric polymer compound comprising a copolymer of a diallylamine and maleic acid has the advantage of allowing preparation of a glass fiber sizing agent that can exhibit stable performance compared to amphoteric polymer compounds composed of different kinds of polymers.

The pH of the second sizing agent may be in the range of 3-6. The second sizing agent can adequately inhibit precipitation and degeneration of the components in the aforementioned pH range which is at the acidic end. Thus, compounds that function under acidic conditions can be included as additives in the second sizing agent.

The glass fiber bundles of the invention are coated with the non-volatile components of the second sizing agent.

The LFT pellets of the invention comprise one or more glass fiber bundles according to the invention, with the glass fiber bundles extending from one end to the other. The pellets are cut to the prescribed length, but preferably the glass fiber bundles are not cut within the pellets but extend from one end of the pellets to the other. When a plurality of glass fiber bundles are present, the fiber bundles may be linear and roughly parallel to each other, or they may be twisted. A polyolefin resin or polyamide resin may be used as the thermoplastic resin (matrix resin) according to the invention.

The LFT mold of the invention can be obtained by injection molding by a conventionally known method using the LFT pellets.

### Effect of the Invention

According to the invention there is provided a first sizing agent comprising a coat-forming agent with high flexibility of use for matrix resins of glass fiber-reinforced resins. There is also provided chopped strands obtained by bundling with the first sizing agent, and a method for producing a glass fiber-reinforced resin mold employing the chopped strands.

Also according to the invention, there is provided a second sizing agent that can exhibit satisfactory performance even when prepared with a pH in the acidic end, and that has sufficiently high flexibility of use for matrix resins. There are still further provided glass fiber bundles and LFT pellets comprising the second sizing agent, and a glass fiber-reinforced resin mold produced from the pellets.

### Description of Embodiments

### <First embodiment>

### (First sizing agent)

The first sizing agent is an aqueous sizing agent suitable for bundling glass fibers during production of chopped strands. The first sizing agent contains an amphoteric polymer compound as the coat-forming agent, a lubricant and water as the solvent. The amphoteric polymer compound used for the preparation of the first sizing agent will be explained first.

The amphoteric polymer compound has at least one cationic unit represented by general formula (1), (2a), (2b), (3a) or (3b) above and at least one anionic unit represented by general formula (4), (5) or (6) above, and the amphoteric polymer compound is obtained by copolymerization of the cationic monomer and anionic monomer.

As cationic monomers there may be mentioned monoallylamines and diallylamines.

As monoallylamines there may be mentioned monoallylamine, N-methylallylamine, N-ethylallylamine, N,N-dimethylallylamine, N,N-diethylallylamine, N-cyclohexylallylamine, N,N-(methyl)cyclohexylallylamine, N,N-(ethyl)cyclohexylallylamine and N,N-dicyclohexylallylamine.

As diallylamines there may be mentioned diallylamine, N-methyldiallylamine, N-ethyldiallylamine, N-benzyldiallylamine, diallyldimethylammonium chloride, diallyldimethylammonium bromide, diallyldimethylammonium iodide, methyldiallyldimethylammonium sulfate, diallyldiethylammonium chloride, diallyldiethylammonium bromide, diallyldiethylammonium iodide, methyldiallyldiethylammonium sulfate, diallylmethylbenzylammonium chloride, diallylmethylbenzylammonium bromide, diallylmethylbenzylammonium iodide, diallylmethylbenzylammonium methylsulfate, diallylethylbenzylammonium chloride, diallylethylbenzylammonium bromide, diallylethylbenzylammonium iodide, diallylethylbenzylammonium methylsulfate, diallyldibenzylammonium chloride, diallyldibenzylammonium bromide, diallyldibenzylammonium iodide, methyldiallyldibenzylammonium sulfate and methyldiallyldibenzylammonium sulfate.

Any of these cationic monomers may be used alone or in combinations of two or more.

Also, inorganic acid salts such as hydrochlorides, sulfates, nitrates or phosphates, or organic acid salts such as acetates or isethionates, of the amines in the monoallylamines and diallylamines, may be used as starting monomers for copolymerization. From the viewpoint of inhibiting coloration of the glass fibers and mold that occurs due to the sizing agent, it is preferred to use an amine hydrochloride. Instead of using these salts as starting monomers, the aforementioned acid components (inorganic and organic acids) may be added after copolymerization with the anionic monomers mentioned below, to add the acid components to the copolymer.

As anionic monomers there may be mentioned fumaric acid, maleic acid, citraconic acid, itaconic acid, and sodium salts, potassium salts and ammonium salts thereof. Any of these anionic monomers may be used alone or in combinations of two or more.

The amphoteric polymer compound is preferably obtained by copolymerization of at least one cationic monomer selected from among monoallylamines, diallylamines, N-methyldiallylamines, N-benzyldiallylamines and diallylmethylammonium chloride, with at least one anionic monomer selected from among fumaric acid, maleic acid, maleic anhydride, citraconic acid, itaconic acid and itaconic anhydride, and more preferably by copolymerization of a diallylamine and maleic acid.

For the copolymer composing the amphoteric polymer compound, the reacting molar ratio of the cationic monomer and anionic monomer (cationic monomer/anionic monomer) is preferably 10/1-1/1 and more preferably 5/1-2.5/1. A reacting molar ratio of greater than 10/1 will tend to cause coloration of the glass fibers and mold, while a ratio of less than 1/1 will tend to interfere with copolymer synthesis.

A reacting molar ratio in the range of 5/1-2.5/1 will allow synthesis of an amphoteric polymer compound that can exhibit performance even in a sizing agent with a pH value in the acidic range, because of the relationship with the isoelectric point described below. Such amphoteric polymer compounds can be used together with additives (for example, lubricants) that function under acidic conditions, thus increasing the degree of freedom of selection of additives compared to conventional butadienemaleic acid copolymers whose function as coat-forming agents is exhibited only in the neutral or alkaline pH range.

The reacting molar ratio of the cationic monomer and anionic monomer has a major effect on the isoelectric point of the amphoteric polymer compound. The electrical charge state of the amphoteric polymer compound varies significantly depending on the pH value of the solution, and the positive and negative charges in the molecule are balanced at a specific pH (isoelectric point), resulting in an overall electrical charge of 0. When the pH of the sizing agent is near the isoelectric point of the amphoteric polymer compound, precipitation of the amphoteric polymer compound tends to occur, and such precipitation hampers use of the sizing agent and prevents the performance of the sizing agent from being adequately exhibited.

For example, when the reacting molar ratio in a copolymer of a diallylamine and maleic acid (diallylamine/maleic acid) is 1/1, precipitation will occur if the pH of the sizing agent prepared using it is in the range of 3.5-5.5. Similarly, precipitation occurs if the pH is 5.0-10.0 when the reacting molar ratio is 2/1, or if the pH is 11.0-13.0 when the reacting molar ratio is 3/1. Consequently, the pH of the sizing agent may be adjusted to a range so that precipitation does not occur during preparation of the sizing agent. When it is desired to adjust the sizing agent to a desired pH value, it is sufficient to synthesize the amphoteric polymer compound with a reacting molar ratio such that precipitation does not occur at that pH.

In the example of the copolymer of a diallylamine and maleic acid mentioned above, the pH range in which precipitation occurs shifts toward the alkali end as the reacting molar ratio of the diallylamine increases. For example, when the amphoteric polymer compound is synthesized with a reacting molar ratio of 3/1, the pH at which precipitation occurs will be in the range of 11.0-13.0, and therefore the adjustable pH range of the sizing agent is wider (including the acidic range, neutral range and the alkaline range below pH 11.0).

Using maleic acid as the anionic monomer for synthesis of the amphoteric polymer compound has the following advantage. Specifically, maleic acid does not readily homopolymerize and thus copolymerization reaction with the cationic monomer proceeds adequately. Consequently, the amphoteric polymer compound that is synthesized can satisfactorily reduce precipitation outside of the pH range near its isoelectric point, thus allowing preparation of a sizing agent that can exhibit stable performance.

In contrast, an amphoteric polymer compound synthesized by copolymerization reaction between a diallylamine or allylamine using acrylic acid instead of maleic acid cannot always exhibit its performance satisfactorily in a sizing agent. Specifically, because acrylic acid homopolymerization occurs during synthesis of a diallylamine/acrylic acid copolymer, precipitation takes place even outside of the pH range near the isoelectric point, making it difficult to prepare a sizing agent that can exhibit stable performance. It is also difficult to obtain copolymers of molecular weight suitable for coat-forming agents for sizing agents, when synthesizing copolymers of allylamines and acrylic acid. Because allylamine/acrylic acid copolymers have lower than suitable molecular weights, it is not possible to obtain sufficient coatability with sizing agents prepared using them.

A method for producing an amphoteric polymer compound will now be explained. First, a cationic monomer and anionic monomer are mixed in water. The monomer concentration in the water during polymerization will normally be 10-75 wt%, although this will depend on the type of monomer.

The copolymerization reaction is a radical polymerization reaction, and it is carried out in the presence of a radical polymerization catalyst. There are no particular restrictions on the type of radical polymerization catalyst, and there may be mentioned peroxides such as t-butyl hydroperoxide, persulfuric acid salts such as ammonium persulfate, sodium persulfate and potassium persulfate, and azobis-based or diazo-based water-soluble azo compounds.

The amount of radical polymerization catalyst added will generally be 1-5 mol% and preferably 1-3 mol% with respect to the monomer. The polymerization temperature will generally be 20-100°C and preferably 35-75°C, and the polymerization time will generally be 20-150 hours and preferably 30-100 hours. Using air as the polymerization atmosphere presents no special problem for polymerization, but an inert gas atmosphere such as nitrogen may also be used.

The amphoteric polymer compound preferably has a polymerization degree such that the intrinsic viscosity is in the range of 0.01-1.0 cm³/g.

The amphoteric polymer compound content in the first sizing agent is preferably 50-90 wt% and more preferably 60-80 wt%, based on the total weight of the non-volatile components in the first sizing agent. An amphoteric polymer compound content of less than 50 wt% will result in insufficient coatability and will tend to cause napping when the glass fiber bundles are cut, while a content of greater than 90 wt% will result in insufficient lubricity and will tend to produce napping during the step of take-up of the glass fiber bundle, and subsequent steps.

The first sizing agent preferably contains an organosilane compound as an additive. The first sizing agent may further comprise, in addition to the amphoteric polymer compound and the lubricant, synthetic resins, pH regulators, surfactants, antistatic agents, antioxidants, antiseptic agents, as well as alcohols such as methanol, ethanol or isopropanol, and other organic solvents.

As examples of organosilane compounds there may be mentioned silane compounds with vinyl groups such as vinyltrimethoxysilane, and silane compounds with amino groups such as γ-aminopropyltriethoxysilane, N-β(aminoethyl)γ-aminopropyltrimethoxysilane or N-β-(N-vinylbenzylaminoethyl)-γ-aminopropyltrimethoxysilane. Silane compounds with amino groups are preferred among these silane compounds as organosilane compounds for the invention, from the viewpoint of compatibility with the matrix resin.

Organosilane compounds have a reactive group that bonds with the glass fibers and a hydrophobic group (organic group) with affinity for thermoplastic resins. By thus including an organosilane compound in the first sizing agent, the organosilane compound functions as a silane coupling agent to improve the interfacial adhesion between the glass fiber bundles and thermoplastic resin.

The organosilane compound content of the first sizing agent is preferably 5-20 wt% based on the total weight of the non-volatile components in the first sizing agent. An organosilane compound content outside of this range will tend to lower the strength of the mold.

As synthetic resins other than the aforementioned amphoteric polymer compounds there may be used emulsions, dispersions or aqueous solutions of conventionally known resins such as urethane resins, polyethylene resins and acrylic resins. These resins can function as film-forming agents or lubricants. The content of resins other than amphoteric polymer compounds is preferably no greater than 30 wt% based on the total weight of non-volatile components in the first sizing agent.

Any lubricant may be used, without particular restrictions on the type, so long as it allows high workability to be achieved in the spinning step and the step of cutting the glass fiber bundles to obtain chopped strands. As lubricants that are useful for obtaining high workability in these steps there may be mentioned condensation products of tetraethylenepentamine and stearic acid (hereinafter referred to as "TEPA/SA"). The reacting molar ratio of tetraethylenepentamine and stearic acid is preferably former/latter = 1/1-1/2. TEPA/SA exhibits the high performance of a lubricant in the sizing agent in the acidic range (for example, pH 4.0-5.5). It can also impart flexibility to the glass fiber bundles in the acidic range. The TEPA/SA content is preferably 0.01-2 wt% based on the total weight of non-volatile components in the first sizing agent.

Examples of additional additives include polyoxyethylenealkyleneamines, polyoxyethylenealkylenealkyl ethers, polyoxyethylene-polyoxypropylene block copolymers, alkyl sulfonates, quaternary ammonium chloride, benzodioxole compounds and antiseptic agents.

As pH regulators there are preferred weak acids such as acetic acid, and a pH regulator is preferably added to adjust the pH of the first sizing agent to 3.0-5.0. The pH adjustment allows the function of the TEPA/SA as a flexibilizer to be exhibited while also promoting hydrolysis of the organosilane compound.

The water used to prepare the first sizing agent may be any type that can dissolve or disperse the aforementioned components, and suitable examples include ion-exchanged water and distilled water. For preparation of the first sizing agent, the components may be added to the water in amounts so that the weight ratio of the non-volatile components is 2-10 wt% (more preferably 3-8 wt%) based on the total weight of the sizing agent. If the weight ratio of non-volatile components in the first sizing agent is outside of the range of 2-10 wt%, it will tend to be difficult to control adhesion of the first sizing agent onto the glass fiber filaments.

The first sizing agent can be produced in the following method. First, an aqueous emulsion, dispersion or aqueous solution of the amphoteric polymer compound that is to function as the film-forming agent is prepared. An organosilane compound is preferably added thereto. It is also preferred to add the additives mentioned above as necessary.

### (Chopped strands)

The chopped strands of the invention are produced from glass fiber bundles obtained by bundling a plurality of glass fiber filaments. Specifically, the chopped strands may be obtained by a step of coating the glass fiber bundles with the first sizing agent, a step of removing the volatile components of the first sizing agent, and a step of cutting the coated glass fiber bundles to an appropriate length (for example 1-10 mm).

The first sizing agent is present between glass fiber filaments and functions as an adhesive (binder) to bind the glass fiber filaments. Also, the first sizing agent coats the outer periphery of the glass fiber filaments either as a continuous or non-continuous film, and thus has the function of protecting the glass fibers.

The filament diameters of the glass fiber filaments used in the glass fiber bundle are preferably 3-23 µm. For increased production efficiency, the number of glass fiber bundle filaments is preferably 200-5000. The yam count of the glass fiber bundles is preferably 100-4000 tex. The glass composition of the glass fiber filaments may be, for example, E glass, S glass or C glass.

The non-volatile component weight (coating) of the first sizing agent with respect to 100 parts by weight of glass fiber filaments is preferably 0.1-2.0 parts by weight and more preferably 0.3-1.5 parts by weight. A non-volatile component coating of less than 0.1 part by weight will tend to result in a poor bundling property and production of napping in the glass fiber bundles, while a coating of greater than 2.0 parts by weight will tend to result in excessive adhesive force and reduced manageability in the molding step.

When chopped strands according to the invention are obtained, the glass fiber bundles may be wound, or used without winding, during the step of coating treatment with the first sizing agent and the cutting step. Also, removal of the volatile components of the first sizing agent may be accomplished by drying in a temperature range of from ordinary temperature to 150°C either before or after the cutting step.

### (Method for producing glass fiber-reinforced resin mold)

The method for producing a glass fiber-reinforced resin mold according to the invention is a method wherein the above-mentioned chopped strands and thermoplastic resin (matrix resin) of the invention are kneaded and the kneaded blend is packed into a die to obtain a mold.

The thermoplastic resin composing the mold may be a thermoplastic resin such as, for example, a polyolefin resin or polyamide resin, or a polycarbonate resin, liquid crystal polyester resin, polyphenylene sulfide resin or polyester resin.

As examples of polyolefin resins there may be mentioned olefin homopolymers such as polyethylene, polypropylene, polybutadiene and polymethylpentene, and their copolymers. Any of these polyolefin resins may be used alone, or two or more may be used in combination.

As polyamide resins there are preferred those wherein the chemical structure between amide bonds is a divalent aliphatic hydrocarbon, divalent alicyclic hydrocarbon or divalent aromatic hydrocarbon, or a combination thereof (such as nylon 6, nylon 66, nylon 10, nylon 12 and nylon 610). Any of these polyamide resins may be used alone, or two or more may be used in combination.

The amount of chopped strands to be combined with the matrix resin during production of the kneaded blend is preferably 20-60 parts by weight with respect to 100 parts by weight as the total weight of the mold. A chopped strand amount of less than 20 parts by weight will tend to result in insufficient mechanical strength of the mold, while an amount of greater than 60 parts by weight will tend to lower the moldability. The kneading step and molding step may be carried out under conditions known in the prior art.

### <Second embodiment>

### (Second sizing agent)

The second sizing agent is an aqueous sizing agent suitable for bundling glass fibers during production of LFT. Specifically, the second sizing agent comprises an amphoteric polymer compound, an organosilane compound, a lubricant and water, as essential components. The amphoteric polymer compound, organosilane compound and additives in the second sizing agent may be the same as used for preparation of the first sizing agent. The following explanation of the second sizing agent will focus on the differences from the first sizing agent described above.

The amphoteric polymer compound content in the second sizing agent is preferably at least 20 wt% and less than 50 wt%, based on the total weight of the non-volatile components in the second sizing agent. An amphoteric polymer compound content of less than 20 wt% will result in inadequate coatability and will produce napping in the glass fiber bundles, while a content of 50 wt% or greater can cause a lack of lubricant, resulting in insufficient lubricity and producing napping in the glass fiber bundle.

The organosilane compound content of the second sizing agent is preferably 10-50 wt% based on the total weight of the non-volatile components in the second sizing agent. An organosilane compound content of less than 10 wt% will tend to lower the mechanical strength of the mold, while a content of greater than 50 wt% will tend to harden the glass fiber bundles and produce napping.

The coat-forming agent or lubricant used in the second sizing agent may be a conventionally known resin such as a urethane resin, polyethylene resin or acrylic resin, instead of the aforementioned amphoteric polymer compound. The content of resins other than the amphoteric polymer compounds is preferably no greater than 20 wt% based on the total weight of non-volatile components in the second sizing agent.

As lubricants there are preferred those that increase manageability in the spinning step, the step of cutting the glass fiber bundles and the step of impregnating the glass fiber bundles with the matrix resin, and there may be mentioned nonionic lubricants and cationic lubricants. The lubricant content is preferably 0.1-50 wt% based on the total weight of non-volatile components in the second sizing agent.

It is particularly preferred to use TEPA/SA as the lubricant in the second sizing agent, to obtain high manageability in the steps mentioned above. For TEPA/SA, the reacting molar ratio of tetraethylenepentamine and stearic acid is preferably former/latter = 1/1-1/2. TEPA/SA exhibits the high performance of a lubricant in the sizing agent in the acidic range (for example, pH 4.0-5.5). It can also impart flexibility to the glass fiber bundles in the acidic range.

Thus, in order to achieve high levels for both inhibition of fuzz generation and spinnability, the TEPA/SA is preferably added to the second sizing agent at 0.01-3 wt% based on the total weight of the non-volatile components in the second sizing agent, and a weak acid such as acetic acid is preferably added as a pH regulator to adjust the pH of the sizing agent to 3.0-5.0 (more preferably 3.5-4.5). Hydrolysis of the organosilane compound can be promoted with a pH in this range.

The water used to prepare the second sizing agent may be any type that can dissolve or disperse the aforementioned components, and suitable examples include ion-exchanged water and distilled water. For preparation of the second sizing agent, the components may be added to the water in amounts so that the weight ratio of the non-volatile components in the second sizing agent is 0.3-2 wt% based on the total weight of the sizing agent. If the weight ratio of non-volatile components in the second sizing agent is outside of the range of 0.3-2 wt%, it will tend to be difficult to control adhesion of the second sizing agent onto the glass fiber filaments.

The second sizing agent can be produced in the following method. First, an aqueous emulsion, dispersion or aqueous solution of the amphoteric polymer compound that is to function as the film-forming agent is prepared. The second sizing agent can be obtained by addition of a silane coupling agent.

### (Glass fiber bundles)

The glass fiber bundles of the invention comprise glass fiber filaments bundled by the second sizing agent described above. That is, the glass fiber bundles of the invention are composed of a plurality of glass fiber filaments and the second sizing agent, with the second sizing agent present between the glass fiber filaments and functioning as an adhesive (binder) to bind the glass fiber filaments. Also, the second sizing agent coats the outer periphery of the glass fiber filaments either as a continuous or non-continuous film, and thus has the function of protecting the glass fibers.

The second sizing agent preferably has sufficient strength to keep the glass fiber filaments in bundles during use of the glass fiber bundles and to allow efficient impregnation of the matrix resin. However, the second sizing agent does not need to be uniformly distributed among the glass fiber bundles. That is, from the viewpoint of adhesion between glass fiber filaments, the second sizing agent is preferably distributed in a roughly uniform concentration from the outer edges of the glass fiber bundles toward the centers, and, for example, glass fiber bundles with even such a construction that they have a high concentration at the other edges and a low concentration at the center sections may be employed for the invention, so long as they can hold the glass fiber filaments and do not present problems for practical use.

The filament diameters of the glass fiber filaments used in the glass fiber bundles of the invention are preferably 3-23 µm. The glass fiber bundles preferably consist of bundles of 200-4000 glass fiber filaments. The yarn count of the glass fiber bundles is preferably 100-4000 tex. The glass composition of the glass fiber filaments may be, for example, E glass, S glass or C glass.

The non-volatile component weight (coating) of the second sizing agent with respect to 100 parts by weight of glass fiber filaments is preferably 0.05-1.5 parts by weight and more preferably 0.1-1.0 part by weight. A non-volatile component coating of less than 0.05 part by weight will tend to result in a poor bundling property and production of napping in the glass fiber bundles, while a coating of greater than 1.5 parts by weight will tend to result in excessive adhesive force and production of napping in the glass fiber bundles.

The glass fiber bundles of the invention can be produced by using a roller-type applicator or belt-type applicator to coat the second sizing agent onto glass fiber filaments that have been drawn from a platinum nozzle (bushing), collecting them with a collector to bundle the glass fiber filaments, and then drying them at between room temperature and 150°C and removing the volatile components such as water. They may also be twisted as appropriate.

The glass fiber bundles coated with the second sizing agent are taken up and subjected to drying treatment to allow storage as a wound pirn. Since the second sizing agent has high flexibility of use for matrix resins, one type of wound pirn can be efficiently used for multiple purposes.

### (LFT pellets)

LFT pellets can be produced by the following procedure from a wound pirn produced in the method described above. Specifically, the glass fiber bundle is drawn from the wound pirn and a single yarn or multiple (2-10) yarns of the glass fiber bundle are combined to make a glass fiber bundle (roving) with a yam count of 100-8000 tex. This is impregnated with a matrix resin and extracted from the die, and it may be cut to the prescribed length of 3-30 mm (more preferably 5-15 mm). The impregnated matrix resin is preferably a thermoplastic resin, and as thermoplastic resins there may be mentioned polyolefin resins and polyamide resins. Additional examples include thermoplastic resins such as polycarbonate resins, polyester resins, liquid crystal polyester resins and polyphenylene sulfide resins.

As examples of polyolefin resins there may be mentioned olefin homopolymers such as polyethylene, polypropylene, polybutadiene and polymethylpentene, and their copolymers. Any of these polyolefin resins may be used alone, or two or more may be used in combination.

As polyamide resins there are preferred those wherein the chemical structure between amide bonds is a divalent aliphatic hydrocarbon, divalent alicyclic hydrocarbon or divalent aromatic hydrocarbon, or combinations thereof (such as nylon 6, nylon 66, nylon 10, nylon 12 and nylon 610). Any of these polyamide resins may be used alone, or two or more may be used in combination.

The matrix resin may be impregnated into the glass fiber bundles so that the glass fiber content, based on the total weight of the resin-impregnated glass fiber bundles, is 20-80 wt% (preferably 30-70 wt%). If the glass fiber content is less than 20 wt% the mechanical strength of the mold will tend to be insufficient, while if it is greater than 80 wt% impregnation defects will tend to occur, potentially resulting in inadequate water resistance of the mold.

A glass fiber-reinforced resin mold is produced by injection molding of the LFT pellets. Specifically, the mold is produced by a molding step. That is, the LFT pellets are heated for plasticizing and packed into a die to produce a mold. The molding step may be injection molding under known conditions.

### Examples

Preferred examples of the invention will now be explained in greater detail, with the understanding that these examples are in no way limitative on the invention.

### [Preparation of first sizing agent]

### (Example 1)

An appropriate amount of acetic acid was added to purified water, to obtain a dilute aqueous acetic acid solution with a pH of 4. After adding the components listed in Table 1 in the listed amounts to the container containing the dilute aqueous acetic acid solution, acetic acid was further added to pH 4 and the total amount was increased to 100 parts by weight to prepare a sizing agent. The weight of the non-volatile components was 5.0 wt% based on the total weight of the sizing agent of this example.

There were used an amphoteric polymer compound with a reacting molar ratio (diallylamine/maleic acid) as the coat-forming agent of 3/1 (hereinafter referred to as DAA/MA3) (solid concentration: 25 wt%), the diaminosilane N-β(aminoethyl)γ-aminopropyltrimethoxysilane (solid concentration: 60 wt%) as an organosilane compound, TEPA/SA (trade name: HG-180, product of Toho Chemical Industry Co., Ltd., solid concentration: 30 wt%) as a lubricant and a urethane resin (trade name: RC-30K, product of Nippon NSC, Ltd., solid concentration: 30 wt%) as a coat-forming agent other than the amphoteric polymer compound.

### (Example 2)

A sizing agent was obtained in the same method as Example 1, except that a polyethylene resin emulsion (trade name: CHEMIPEARL W401, product of Mitsui Chemicals, Inc., solid concentration: 30 wt%) was used instead of TEPA/SA as the lubricant, and each of the components listed in Table 1 were added to the purified water without addition of acetic acid, to prepare the sizing agent. The weight of the non-volatile components was 5.1 wt% based on the total weight of the sizing agent of this example, and the pH was 9. A polyethylene resin emulsion was used as the lubricant for this example, because the performance of TEPA/SA as a lubricant is insufficient in the alkaline range.

### (Example 3)

A sizing agent with a pH of 9 was obtained in the same method as Example 2, except that an amphoteric polymer compound with a reacting molar ratio (diallylamine/maleic acid) of 1/1 (hereinafter referred to as DAA/MA1) (solid concentration: 25 wt%) was used instead of the amphoteric polymer compound of Example 1, and each of the components listed in Table 1 were added in the amounts listed. The weight of the non-volatile components was 5.1 wt% based on the total weight of the sizing agent of this example.

### (Example 4)

A sizing agent with a pH of 4 was obtained in the same method as Example 1, except that an amphoteric polymer compound with a reacting molar ratio (monoallylamine/maleic acid) of 1/1 (hereinafter referred to as AA/MA) (solid concentration: 20 wt%) was used instead of the amphoteric polymer compound of Example 1, and each of the components listed in Table 1 were added in the amounts listed. The weight of the non-volatile components was 5.0 wt% based on the total weight of the sizing agent of this example.

### (Example 5)

A sizing agent with a pH of 4 was obtained in the same method as Example 1, except that an amphoteric polymer compound with a reacting molar ratio (N-methyldiallylamine/maleic acid) of 1/1 (hereinafter referred to as MDAA/MA) (solid concentration: 20 wt%) was used instead of the amphoteric polymer compound of Example 1, and each of the components listed in Table 1 were added in the amounts listed. The weight of the non-volatile components was 5.0 wt% based on the total weight of the sizing agent of this example.

### (Example 6)

A sizing agent with a pH of 4 was obtained in the same method as Example 1, except that an amphoteric polymer compound with a reacting molar ratio (dimethyldiallylammonium chloride/maleic acid) of 1/1 (hereinafter referred to as DADMAC/MA) (solid concentration: 20 wt%) was used instead of the amphoteric polymer compound of Example 1, and each of the components listed in Table 1 were added in the amounts listed. The weight of the non-volatile components was 5.0 wt% based on the total weight of the sizing agent of this example.

### (Comparative Example 1)

A sizing agent with a pH of 4 was obtained in the same method as Example 1, except that a butadiene malate copolymer (maleic acid/butadiene reacting molar ratio = 1/1, trade name: BG-7, product of Sanyo Chemical Industries, Ltd., solid concentration: 25 wt%) was used instead of the amphoteric polymer compound of Example 1, and each of the components listed in Table 2 were added in the amounts listed. The weight of the non-volatile components was 5.0 wt% based on the total weight of the sizing agent of this comparative example.

### (Comparative Example 2)

A sizing agent was obtained in the same method as Example 2, except that the same butadiene malate copolymer used in Comparative Example 1 was used instead of the amphoteric polymer compound of Example 1, and each of the components listed in Table 2 were added in the amounts listed. The weight of the non-volatile components was 5.1 wt% based on the total weight of the sizing agent of this comparative example, and the pH was 9.

### (Comparative Example 3)

A sizing agent with a pH of 4 was obtained in the same method as Example 1, except that a urethane resin (trade name: RC-30K, product of Nippon NSC, Ltd., solid concentration: 30 wt%) was used instead of the amphoteric polymer compound of Example 1, and each of the components listed in Table 2 were added in the amounts listed. The weight of the non-volatile components was 5.4 wt% based on the total weight of the sizing agent of this comparative example. The sizing agent of this comparative example is one that is widely used for production of chopped strands for polyamide resins.

### (Comparative Example 4)

A sizing agent with a pH of 9 was obtained in the same method as Example 2, except that a maleic acid-modified polypropylene resin (trade name: HI-TECH P5700, product of Toho Chemical Industry Co., Ltd., solid concentration: 30 wt%) was used instead of the amphoteric polymer compound of Example 1, and each of the components listed in Table 2 were added in the amounts listed. The weight of the non-volatile components was 4.1 wt% based on the total weight of the sizing agent of this comparative example. The sizing agent of this comparative example is one that is widely used for production of chopped strands for polypropylene resins.

### [Evaluation of stability of first sizing agent]

The stability was evaluated by visual observation of the condition at 24 hours after preparation of the sizing agents of Examples 1-3 and Comparative Examples 1-4. The evaluation was made on the following scale.
A: No settling of solids.
B: Minimal settling of solids.
C: Large settling of solids, boundary visible between solid phase and aqueous phase.

The sizing agent obtained in Comparative Example 1 exhibited a high degree of solid settling (evaluation: C) and could not be used as a sizing agent. This was attributed to the fact that the butadiene malate copolymer-containing sizing agent was prepared in the acidic range (pH 4).

### [Production of glass fiber bundles and chopped strands]

A roller-type applicator was used to coat E glass fiber filaments (filament diameter: 10 µm, 1600 per bundle) with the sizing agents obtained in Examples 1-6 and Comparative Examples 2-4. The coating was 0.6 part by weight of non-volatile components in the sizing agent, with 100 parts by weight as the total weight of the glass fibers. The glass fiber bundles were cut to lengths of 3 mm and dried with hot air to obtain chopped strands of Examples 1-6 and Comparative Examples 2-4.

### [Evaluation of napping in chopped strands]

A 5 kg portion of each of the chopped strands was placed in a drum tumbler and stirred by rotation for 5 minutes, after which they were passed through a sieve with a mesh size allowing passage of the chopped strands, and the weight of broken filaments in the sieve was measured and used to evaluate the napping.

### [Production of polyamide resin molds]

A mold was produced by the following procedure, using a polyamide resin (trade name: LEONA 1402S, nylon 66 by Asahi Kasei Corp.) as the matrix resin, and each of the chopped strands. Specifically, the polyamide resin and chopped strands were kneaded at a temperature of 280°C and the kneaded blend was packed into a die, to produce polyamide resin molds of Examples 1-6 and Comparative Examples 2-4 to be used for the following evaluation tests. The polyamide resin and chopped strands were kneaded in amounts for a chopped strand content of 30 wt% with respect to the total weight of the mold.

### [Evaluation tests for polyamide resin molds]

The polyamide resin mold was evaluated in the following method. Specifically, the tensile strength, impact strength and color tone were evaluated using appropriate test apparatuses. The tensile strength and impact strength (Charpy impact strength) were measured according to ASTM D638 and ASTM D5942, respectively. The color tone was evaluated using a color difference meter to determine the b value according to JIS Z8722.

The compositions of the sizing agents and the results of evaluation are shown in Table 1 and Table 2.

**[Table 1]**

| | | | Solid content | Example 1 | Example 2 | Example 3 | Example 4 | Example 5 | Example 6 |
|---|---|---|---|---|---|---|---|---|---|
| Sizing agent composition addition (pts. by wt.) | Coat-forming agent | DAA/MA3 | 25 wt% | 14.0 | 14.0 | - | - | - | - |
| | | DAA/MA1 | 25 wt% | - | - | 14.0 | - | - | - |
| | | AA/MA | 20 wt% | - | - | | 17.5 | - | - |
| | | MDAA/MA | 20 wt% | - | - | - | - | 17.5 | - |
| | | DADMAC/MA | 20 wt% | - | - | - | - | - | 7.5 |
| | | Urethane resin | 30 wt% | 2.9 | 2.9 | 2.9 | 2.9 | 2.9 | 2.9 |
| | Organosilane compound | Diaminosilane | 60 wt% | 1.0 | 1.0 | 1.0 | 1.0 | 1.0 | 1.0 |
| | Lubricant | TEPA/SA | 30 wt% | 0.1 | - | - | 0.1 | 0.1 | 0.1 |
| | | Polyethylene resin emulsion | 30 wt% | - | 0.5 | 0.5 | - | - | - |
| | pH regulator | Acetic acid | | q.s. | - | - | q.s. | q.s. | q.s. |
| Evaluated properties | Sizing agent | pH value | | 4 | 9 | 9 | 4 | 4 | 4 |
| | | Stability | | A | A | B | B | B | B |
| | Chopped strands | Napping (g/5kg) | | 5 | 10 | 5 | 5 | 5 | 5 |
| | Polyamide resin mold | Tensile strength (MPa) | | 192 | 193 | 192 | 188 | 188 | 187 |
| | | Impact strength (kJ/m²) | | 72 | 68 | 68 | 64 | 66 | 67 |
| | | Color tone (b value) | | 1.4 | 1.4 | 1.5 | 1.7 | 2.2 | 2.1 |

**[Table 2]**

| | | | Solid content | Comp. Ex. 1 | Comp. Ex. 2 | Comp. Ex. 3 | Comg. Ex. 4 |
|---|---|---|---|---|---|---|---|
| Sizing agent composition addition (pts. by wt.) | Coat-forming agent | Maleic acid-butadiene copolymer | 25 wt% | 14.0 | 14.0 | - | - |
| | | Maleic acid-modified Polypropylene resin | 30wt% | - | - | - | 1.5 |
| | | Urethane resin | 30 wt% | 2.9 | 2.9 | 16.0 | - |
| | Organosilane compound | Diaminosilane | 60 wt% | 1.0 | 1.0 | 1.0 | 1.0 |
| | Lubricant pH regulator | TEPA/SA | 30 wt% | 0.1 | - | 0.1 | - |
| | | Polyethylene resin emulsion | 30 wt% | - | 0.5 | - | 0.5 |
| | | Acetic acid | | q.s. | - | q.s. | - |
| Evaluated properties | Sizing agent | pH value | | 4 | 9 | 4 | 9 |
| | | Stability | | C | A | A | A |
| | Chopped strands | Napping (g/5kg) | | - | 10 | 1 | 5 |
| | Polyamide resin mold | Tensile strength (MPa) | | - | 184 | 185 | 114 |
| | | Impact strength (kJ/m²) | | - | 64 | 63 | 24 |
| | | Color tone (b value) | | - | 5.9 | 2.5 | 5.8 |

### [Production of polypropylene resin molds]

Polypropylene resin molds were produced for Example 1 and Comparative Examples 2-4 by the following procedure, using a polypropylene resin (trade name: AW-564, product of Mitsui Sumitomo Polyolefin Company) as the matrix resin and each of the chopped strands of Example 1 and Comparative Examples 2-4. Specifically, the polypropylene resin and chopped strands were kneaded at a temperature of 240°C and the kneaded blend was packed into a die, to produce polypropylene resin molds of Example 1 and Comparative Examples 2-4 to be used for the following evaluation tests. The polypropylene resin and chopped strands were kneaded in amounts for a chopped strand content of 30 wt% with respect to the total weight of the mold.

### [Evaluation tests for polypropylene resin molds]

The molds were evaluated in the following method. Specifically, the tensile strength, flexural strength and impact strength were evaluated. The tensile strength, flexural strength and impact strength (Charpy impact strength) were measured according to ASTM D638, ASTM D790 and ASTM D5942, respectively. The only evaluation tests for the polypropylene resin mold of Comparative Example 2 were for tensile strength and impact strength.

### The evaluation results are summarized in Table 3.

**[Table 3]**

| | | Example 1 | Comp. Ex. 2 | Comp. Ex. 3 | Comp. Ex. 4 |
|---|---|---|---|---|---|
| Polypropylene resin mold | Tensile strength (MPa) | 83 | 68 | 70 | 75 |
| | Flexural strength (MPa) | 150 | - | 125 | 135 |
| | Impact strength (kJ/m²) | 42 | 33 | 32 | 35 |

### [Preparation of second sizing agent]

### (Example 7)

An appropriate amount of acetic acid was added to purified water, to obtain a dilute aqueous acetic acid solution with a pH of 5. After adding the components listed in Table 4 in the listed amounts to the container containing the dilute aqueous acetic acid solution, acetic acid was further added to pH 5 and the total amount was increased to 100 parts by weight to prepare a sizing agent.

There were used an amphoteric polymer compound with a reacting molar ratio (diallylamine/maleic acid) of 3/1 (hereinafter referred to as DAA/MA3) (solid content: 25 wt%) as the amphoteric polymer compound (coat-forming agent), the monoaminosilane γ-aminopropyltriethoxysilane (solid concentration: 60 wt%) as a silane coupling agent, TEPA/SA (trade name: HG-180, product of Toho Chemical Industry Co., Ltd., solid concentration: 30 wt%) as a lubricant, polyoxyethylenealkylenealkyl ether (trade name: PLURONIC L44, product of Adeka Corp., solid content: 100 wt%) and polyoxyethylenepolyoxypropylene block copolymer (trade name: EMULGEN LS110, product of Kao Corp., solid content: 100 wt%). The weight of the non-volatile components was 1.0 wt% based on the total weight of the sizing agent of this example.

### (Example 8)

A sizing agent was obtained in the same method as Example 7, except that a polyethylene resin emulsion (trade name: CHEMIPEARL W401, product of Mitsui Chemicals, Inc., solid concentration: 30 wt%) was used instead of TEPA/SA as the lubricant, and each of the components listed in Table 4 were added to the purified water without addition of acetic acid, to prepare the sizing agent. The weight of the non-volatile components was 1.2 wt% based on the total weight of the sizing agent of this example, and the pH was 9. A polyethylene resin emulsion was used as the lubricant for this example, because the performance of TEPA/SA as a lubricant is insufficient in the alkaline range.

### (Example 9)

A sizing agent with a pH of 9 was obtained in the same method as Example 8, except that an amphoteric polymer compound with a reacting molar ratio (diallylamine/maleic acid) of 1/1 (hereinafter referred to as DAA/MA1) (solid concentration: 25 wt%) was used instead of the amphoteric polymer compound of Example 7, and each of the components listed in Table 4 were added in the amounts listed. The weight of the non-volatile components was 1.2 wt% based on the total weight of the sizing agent of this example.

### (Example 10)

A sizing agent with a pH of 5 was obtained in the same method as Example 7, except that an amphoteric polymer compound with a reacting molar ratio (monoallylamine/maleic acid) of 1/1 (hereinafter referred to as AA/MA) (solid concentration: 20 wt%) was used instead of the amphoteric polymer compound of Example 7, and each of the components listed in Table 4 were added in the amounts listed. The weight of the non-volatile components was 1.0 wt% based on the total weight of the sizing agent of this example.

### (Example 11)

A sizing agent with a pH of 5 was obtained in the same method as Example 7, except that an amphoteric polymer compound with a reacting molar ratio (N-methyldiallylamine/maleic acid) of 1/1 (hereinafter referred to as MDAA/MA) (solid concentration: 20 wt%) was used instead of the amphoteric polymer compound of Example 7, and each of the components listed in Table 4 were added in the amounts listed. The weight of the non-volatile components was 1.0 wt% based on the total weight of the sizing agent of this example.

### (Example 12)

A sizing agent with a pH of 5 was obtained in the same method as Example 7, except that an amphoteric polymer compound with a reacting molar ratio (dimethyldiallylammonium chloride/maleic acid) of 1/1 (hereinafter referred to as DADMAC/MA) (solid concentration: 20 wt%) was used instead of the amphoteric polymer compound of Example 7, and each of the components listed in Table 4 were added in the amounts listed. The weight of the non-volatile components was 1.0 wt% based on the total weight of the sizing agent of this example.

### (Comparative Example 5)

A sizing agent with a pH of 5 was obtained in the same method as Example 7, except that an acrylic acid ester (trade name: VINIBRAN 2647, product of Nisshin Chemical Industry Co., Ltd., solid concentration: 30 wt%) was used instead of DAA/MA3, and each of the components listed in Table 4 were added in the amounts listed. The weight of the non-volatile components was 1.0 wt% based on the total weight of the sizing agent of this comparative example. The sizing agent of this comparative example is one that is widely used for production of glass fiber-reinforced thermoplastic resin pellets impregnated with polyamide resins.

### (Comparative Example 6)

A sizing agent with a pH of 9 was obtained in the same method as Example 8, except that maleic acid-modified polypropylene (trade name: P-5700, product of Toho Chemical Industry Co., Ltd., solid concentration: 30 wt%) was used instead of DAA/MA3, and each of the components listed in Table 4 were added in the amounts listed. The weight of the non-volatile components was 1.2 wt% based on the total weight of the sizing agent of this comparative example. The sizing agent of this comparative example is one that is widely used for production of glass fiber-reinforced thermoplastic resin pellets impregnated with polypropylene resins.

### (Comparative Example 7)

A sizing agent was obtained in the same method as Example 8, except that each of the components listed in Table 4 were added to purified water without addition of acetic acid to prepare the sizing agent, a butadiene malate copolymer (maleic acid/butadiene reacting molar ratio = 1/1, trade name: BG-7, product of Sanyo Chemical Industries, Ltd., solid concentration: 25 wt%) was used instead of the DAA/MA3, and each of the components listed in Table 4 were added in the amounts listed. The weight of the non-volatile components was 1.2 wt% based on the total weight of the sizing agent of this comparative example, and the pH was 9.

### [Production of glass fiber bundles]

A roller-type applicator was used to coat E glass fiber filaments (filament diameter: 17 µm) with the sizing agents obtained in Examples 7-12 and Comparative Examples 5-7, and after bundling in groups of 400, the glass fiber bundles were cylindrically taken up to obtain glass fiber bundles of Examples 7-12 and Comparative Examples 5-7. The coating was 0.2 part by weight of non-volatile components in the sizing agent, with 100 parts by weight as the total weight of the glass fibers. The sizing agent-coated glass fiber bundles were dried to form coated films.

### [Evaluation of spinnability of sizing agents]

The spinnability of the sizing agents was evaluated during production of the glass fiber bundles of Examples 7-12 and Comparative Examples 5-7. Evaluation of the spinnability (take-up property) was made by cylindrically taking up each of the glass fiber bundles and evaluating the wound condition as the stability in the wound pirn forming step. The evaluation was made on the following scale.
A: Absolutely no problems.
B: Slight cob-webbing.
C: Extensive cob-webbing, potential pirn collapse.

### [Production of glass fiber-reinforced thermoplastic resin pellets (matrix resin: polyamide resin)]

The glass fiber bundles of Examples 7-12 and Comparative Examples 5-7 were doubled into rovings and each was impregnated with a polyamide resin (trade name: LEONA 1300S, nylon 66 by Asahi Kasei Corp.) to produce resin-impregnated glass fiber bundles. The polyamide resin was impregnated to a degree such that the glass fiber content was 40 wt% based on the total weight of the resin-impregnated glass fiber bundle. Each resin-impregnated glass fiber bundle was cut to a length of 10 mm to obtain glass fiber-reinforced polyamide pellets of Examples 7-12 and Comparative Examples 5-7.

### [Production of polyamide resin molds]

The glass fiber-reinforced polyamide pellets of Examples 7-12 and Comparative Examples 5-7 were used for injection molding to produce polyamide resin molds of Examples 7-12 and Comparative Examples 5-7.

### [Evaluation tests for polyamide resin molds]

The polyamide resin molds of Examples 7-12 and Comparative Examples 5-7 were evaluated in the following method. Specifically, the tensile strength, flexural strength and Izod impact strength (notched) were evaluated using appropriate test apparatuses. The tensile strength, flexural strength and Izod impact strength were measured according to ASTM D638, ASTM D790 and ASTM D256, respectively.

The compositions of the sizing agents and the results of evaluation are shown in Table 4. The results are shown according to the type of coated sizing agent.

### [Production of glass fiber-reinforced thermoplastic resin pellets (matrix resin: polypropylene resin)]

The glass fiber bundles of Examples 7-12 and Comparative Examples 5-7 were doubled into rovings and each was impregnated with a polypropylene resin (trade name: AW-564, polyolefin by Mitsui Sumitomo) to produce resin-impregnated glass fiber bundles. The polypropylene resin was impregnated to a degree such that the glass fiber content was 40 wt% based on the total weight of the resin-impregnated glass fiber bundle. Each resin-impregnated glass fiber bundle was cut to a length of 10 mm to obtain glass fiber-reinforced polyolefin pellets of Examples 7-12 and Comparative Examples 5-7.

### [Production of polypropylene resin molds]

The glass fiber-reinforced polyolefin pellets of Examples 7-12 and Comparative Examples 5-7 were used for injection molding to produce polyolefin molds of Examples 7-12 and Comparative Examples 5-7.

### [Evaluation tests for polypropylene resin molds]

The polypropylene resin molds of Examples 7-12 and Comparative Examples 5-7 were subjected to the same evaluation tests as the polyamide resin molds.

The evaluation results are summarized in Table 4.

**[Table 4]**

| | | | Solid content | Example 7 | Example 8 | Example 9 | Example 10 | Example 11 | Example 12 | Comp. Ex. 5 | Comp. Ex. 6 | Comp. Ex. 7 |
|---|---|---|---|---|---|---|---|---|---|---|---|---|
| Sizing agent composition (wt%) | Coat-forming agent | DAA/MA3 | 25 wt% | 1.2 | 1.2 | - | - | - | - | - | - | - |
| | | DAA/MA1 | 25 wt% | - | - | 1.2 | - | - | - | | - | |
| | | AA/MA | 20 wt% | - | - | - | 1.5 | - | - | - | | |
| | | MDAA/MA | 20 wt% | - | - | - | - | 1.5 | - | - | - | - |
| | | DADMAC/MA | 20 wt% | - | - | - | | - | 1.5 | - | - | - |
| | | Acrylic acid ester | 30 wt% | - | - | - | - | - | - | 1.0 | - | - |
| | | Maleic acid-modified polypropylene resin | 30 wt% | - | - | - | - | - | - | - | 1.0 | - |
| | | Maleic acid-butadiene copolymer | 25 wt% | - | - | - | - | - | - | - | - | 1.2 |
| | Silane coupling agent | Monoaminosilane | 60 wt% | 0.2 | 0.2 | 0.2 | 0.2 | 0.2 | 0.2 | 0.2 | 0.2 | 0.2 |
| | Lubricant | TEPA/SA | 30 wt% | 0.07 | - | - | 0.07 | 0.07 | 0.07 | 0.07 | - | - |
| | | Polyethylene resin emulsion | 30 wt% | - | 0.5 | 0.5 | - | - | - | - | 0.5 | 0.5 |
| | | Polyoxyethylene alkylene alkyl ether | 100 wt% | 0.4 | 0.4 | 0.4 | 0.4 | 0.4 | 0.4 | 0.4 | 0.4 | 0.4 |
| | | Polyoxyethylene-polyoxypropylenc block copolymer | 100 wt% | 0.2 | 0.2 | 0.2 | 0.2 | 0.2 | 0.2 | 0.2 | 0.2 | 0.2 |
| | pH regulator | Acetic acid | | q.s. | - | - | q.s. | q.s. | q.s. | q.s. | - | - |
| Evaluated properties | Sizing agent | pH value | | 5 | 9 | 9 | 5 | 5 | 5 | 5 | 9 | 9 |
| | Glass fiber bundle | Spinnability | | A | B | A | B | B | B | B | B | C |
| | Polyamide mold | Tensile strength (MPa) | | 209 | 211 | 207 | 198 | 197 | 195 | 206 | 102 | 193 |
| | | Flexural strength (MPa) | | 319 | 318 | 315 | 302 | 298 | 296 | 308 | 154 | 296 |
| | | Izod impact strength (kJ/m²) | | 21 | 23 | 20 | 19 | 18 | 26 | 21 | 5 | 16 |
| | Polypropylene mold | Tensile strength (MPa) | | 123 | - | - | - | - | - | 97 | 119 | 110 |
| | | Flexural strenght (MPa) | | 199 | - | - | - | - | - | 161 | 187 | 178 |
| | | Izod impact strength (kJ/m²) | | 19 | - | - | - | - | - | 15 | 15 | 14 |

### Industrial Applicability

According to the invention there is provided a glass fiber sizing agent with high flexibility of use for matrix resins of glass fiber-reinforced resins.

## Claims

1. A glass fiber sizing agent comprising an amphoteric polymer compound a lubricant and water,
wherein the amphoteric polymer compound comprises at least one cationic unit selected from the group consisting of allylamines represented by the following general formula (1), (2a), (2b), (3a) or (3b), and allylamine inorganic acid salts and organic acid salts, and at least one anionic unit represented by the following general formula (4), (5) or (6); 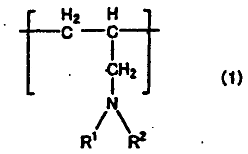 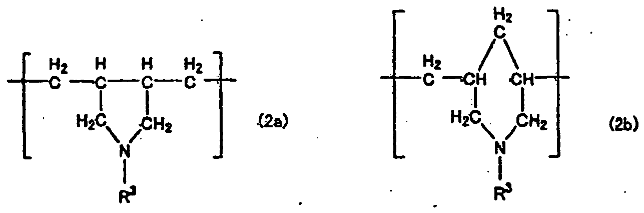 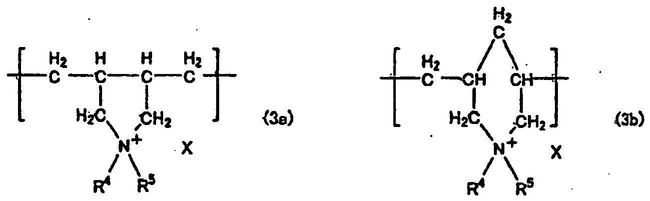 wherein R¹ and R² each independently represent hydrogen, methyl, ethyl or cyclohexyl; R³, R⁴ and R⁵ each independently represent hydrogen, methyl, ethyl or benzyl, and X represents an anion; 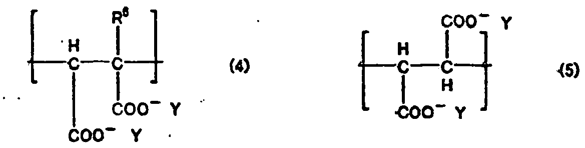 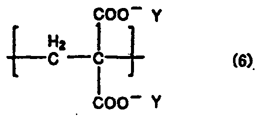 wherein R⁶ is hydrogen or a methyl group; and each Y independently represents a cation selected from among Na⁺, K⁺, NH₄⁺, 1/2Ca²⁺, 1/2Mg²⁺, 1/2Fe²⁺, 1/3Al³⁺ and 1/3Fe³⁺.

2. The glass fiber sizing agent according to claim 1, wherein the amphoteric polymer compound is a copolymer of a diallylamine and maleic acid.

3. The glass fiber sizing agent according to claim 1 or 2, containing the amphoteric polymer compound at 50-90 wt% based on the total weight of the non-volatile components in the glass fiber sizing agent.

4. The glass fiber sizing agent according to any one of claims 1 to 3, wherein the pH value is in the range of 3-5.

5. The glass fiber sizing agent according to claim 1 or 2, further comprising an organosilane compound, and containing the amphoteric polymer compound at 20 wt% or greater and less than 50 wt% based on the total weight of the non-volatile components in the glass fiber sizing agent.

6. The glass fiber sizing agent according to claim 5, wherein the pH value is in the range of 3-6.

7. A chopped strand coated with non-volatile components of the glass fiber sizing agent according to any one of claims 1 to 4.

8. A method for producing a mold comprising a glass fiber-reinforced resin, comprising:
a kneading step in which the chopped strands according to claim 7 and a thermoplastic resin are kneaded, and
a molding step in which the kneaded blend obtained in the kneading step is injection molded to obtain a mold.

9. A glass fiber bundle coated with non-volatile components of the glass fiber sizing agent according to claim 5 or 6.

10. A glass fiber-reinforced thermoplastic resin pellet comprising one or more glass fiber bundles according to claim 9, wherein the glass fiber bundles extend from one end to the other.

11. A mold obtained by injection molding of the glass fiber-reinforced thermoplastic resin pellets according to claim 10.

## Patentansprüche

1. Eine Glasfaserschlichte, welche eine amphotere Polymerverbindung, ein Gleitmittel und Wasser umfasst,
wobei die amphotere Polymerverbindung mindestens eine kationische Einheit, ausgewählt aus der Gruppe bestehend aus Allylaminen der folgenden allgemeinen Formel (1), (2a), (2b), (3a) oder (3b) und anorganischen oder organischen Allylaminsäuresalzen, und mindestens eine anionische Einheit der folgenden allgemeinen Formel (4), (5) oder (6), umfasst; 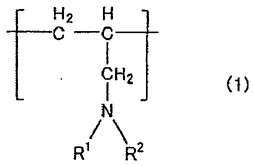 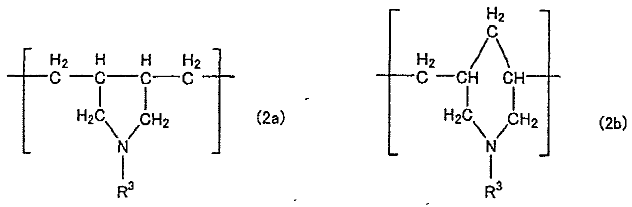 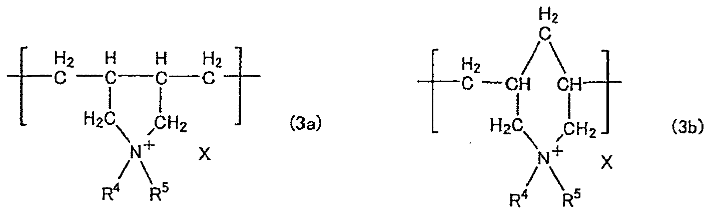 wobei R¹ und R² jeweils unabhängig Wasserstoff, Methyl, Ethyl oder Cyclohexyl darstellen; R³, R⁴ und R⁵ jeweils unabhängig Wasserstoff, Methyl, Ethyl oder Benzyl darstellen und X ein Anion darstellt; 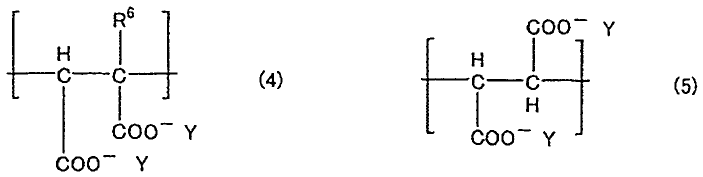 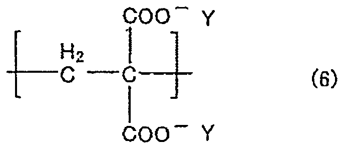 wobei R⁶ Wasserstoff oder ein Methylrest ist; und jedes Y unabhängig ein Kation ausgewählt aus Na⁺, K⁺, NH₄⁺, 1/2 Ca²⁺, 1/2 Mg²⁺, 1/2 Fe²⁺, 1/3 Al³⁺ und 1/3 Fe³⁺ darstellt.

2. Die Glasfaserschlichte nach Anspruch 1, wobei die amphotere Polymerverbindung ein Copolymer aus einem Diallylamin und Maleinsäure ist.

3. Die Glasfaserschlichte nach Anspruch 1 oder 2, welche 50-90 Gewichts-% der amphoteren Polymerverbindung bezogen auf das Gesamtgewicht der nicht-flüchtigen Bestandteile in der Glasfaserschlichte enthält.

4. Die Glasfaserschlichte nach einem der Ansprüche 1 bis 3, wobei der pH-Wert im Bereich von 3-5 liegt.

5. Die Glasfaserschlichte nach Anspruch 1 oder 2, welche weiter eine Organosilanverbindung umfasst und 20 Gewichts-% oder mehr und weniger als 50 Gewichtsprozent der amphoteren Polymerverbindung bezogen auf das Gesamtgewicht der nicht-flüchtigen Bestandteile in der Glasfaserschlichte enthält.

6. Die Glasfaserschlichte nach Anspruch 5, wobei der pH-Wert im Bereich von 3-6 liegt.

7. Eine geschnittene Faser, beschichtet mit nicht-flüchtigen Bestandteilen der Glasfaserschlichte nach einem der Ansprüche 1 bis 4.

8. Ein Verfahren zur Herstellung eines Formkörpers, welcher ein glasfaserverstärktes Harz umfasst, umfassend:
einen Knetschritt, in welchem die geschnittenen Fasern nach Anspruch 7 und ein thermoplastisches Harz geknetet werden, und
einen Formschritt, in dem das aus dem Knetschritt erhaltene, geknetete Gemisch spritzgegossen wird, um einen Formkörper zu erhalten.

9. Ein Glasfaserbündel, beschichtet mit nicht-flüchtigen Bestandteilen der Glasfaserschlichte nach Anspruch 5 oder 6.

10. Ein glasfaserverstärktes thermoplastisches Harzpellet, umfassend ein oder mehrere Glasfaserbündel nach Anspruch 9, wobei die Glasfaserbündel sich von einem Ende zum anderen erstrecken.

11. Ein Formkörper, erhalten durch Spritzgießen der glasfaserverstärkten thermoplastischen Harzpellets nach Anspruch 10.

## Revendications

1. Agent d'ensimage de fibres de verre comprenant un composé polymèrique amphotère, un lubrifiant et de l'eau,
dans lequel le composé polymèrique amphotère comprend au moins un motif cationique choisi dans le groupe constitué par les allylamines représentées par la formule générale suivante (1), (2a), (2b), (3a) ou (3b), et les sels d'acide organique et les sels d'acide inorganique d'allylamine, et au moins un motif anionique représenté par la formule générale suivante (4), (5) ou (6); 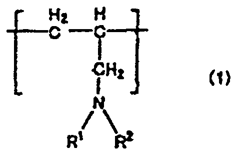 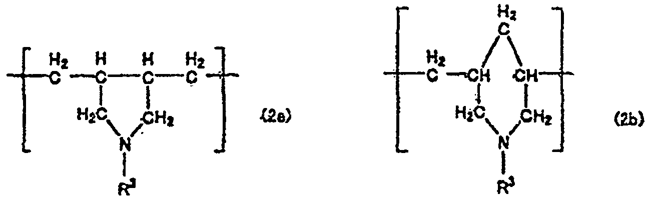 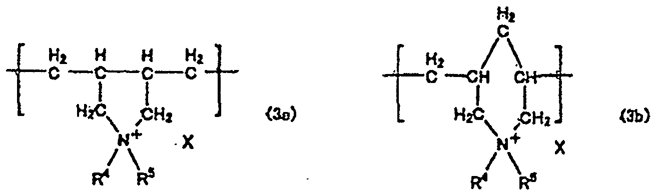 dans lesquelles R¹ et R² représentent chacun indépendamment un hydrogène, un méthyle, un éthyle ou un cyclohexyle ; R³, R⁴ et R⁵ représentent chacun indépendamment un hydrogène, un méthyle, un éthyle ou un benzyle, et X représente un anion ; 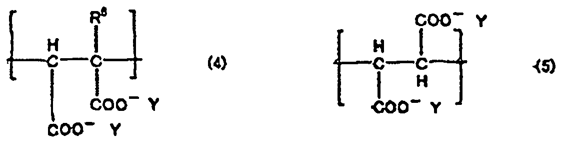 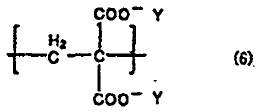 dans lesquelles R⁶ est un hydrogène ou un méthyle ; et chaque Y représente indépendamment un cation choisi parmi Na⁺, K⁺, NH₄⁺, 1/2Ca²⁺, 1/2Mg²⁺, 1/2Fe²⁺, 1/3Al³⁺ et 1/3Fe³⁺.

2. Agent d'ensimage de fibres de verre selon la revendication 1, dans lequel le composé polymèrique amphotère est un copolymère d'une diallylamine et d'acide maléique.

3. Agent d'ensimage de fibres de verre selon la revendication 1 ou 2, contenant le composé polymèrique amphotère à 50 à 90 % en poids, sur la base du poids total des composants non volatils dans l'agent d'ensimage de fibres de verre.

4. Agent d'ensimage de fibres de verre selon l'une quelconque des revendications 1 à 3, dans lequel la valeur de pH est comprise dans la plage allant de 3 à5.

5. Agent d'ensimage de fibres de verre selon la revendication 1 ou 2, comprenant en outre un composé d'organosilane, et contenant le composé polymèrique amphotère à 20 % en poids ou plus et à moins de 50 % en poids, sur la base du poids total des composants non volatils dans l'agent d'ensimage de fibres de verre.

6. Agent d'ensimage de fibres de verre selon la revendication 5, dans lequel la valeur de pH est comprise dans la plage allant de 3 à 6.

7. Fibre coupée enduite avec les composants non volatils de l'agent d'ensimage de fibres de verre selon l'une quelconque des revendications 1 à 4.

8. Procédé de production d'un moule comprenant une résine renforcée par des fibres de verre, comprenant :
une étape de malaxage dans laquelle les fibres coupées selon la revendication 7 et une résine thermoplastique sont malaxés, et
une étape de moulage dans laquelle le mélange malaxé obtenu dans l'étape de malaxage est moulé par injection pour obtenir un moule.

9. Faisceau de fibres de verre enduit avec les composants non volatils de l'agent d'ensimage de fibres de verre selon la revendication 5 ou 6.

10. Pastille de résine thermoplastique renforcée par des fibres de verre comprenant un ou plusieurs faisceaux de fibres de verre selon la revendication 9, dans laquelle les faisceaux de fibres de verre se prolongent d'une extrémité à l'autre.

11. Moule obtenu par moulage par injection des pastilles de résine thermoplastique renforcée par des fibres de verre selon la revendication 10.
